(19) Europäisches Patentamt
European Patent Office
Office européen des brevets

(11) EP 4 755 943 A1

(12) **EUROPEAN PATENT APPLICATION**
published in accordance with Art. 153(4) EPC

(43) Date of publication:
**10.06.2026 Bulletin 2026/24**

(21) Application number: **24849110.2**

(22) Date of filing: **26.07.2024**

(51) International Patent Classification (IPC):
**C08G 63/08** (2006.01)      **C08G 63/80** (2006.01)
**C08G 63/91** (2006.01)      **C09J 7/30** (2018.01)
**C09J 167/04** (2006.01)

(52) Cooperative Patent Classification (CPC):
**C08G 63/08; C08G 63/80; C08G 63/91; C09J 7/30; C09J 167/04**

(86) International application number:
**PCT/JP2024/026871**

(87) International publication number:
**WO 2025/028458 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 JP 2023125568**

(71) Applicant: **Maxell, Ltd.**
**Kyoto 618-8525 (JP)**

(72) Inventors:
• **SUN, Yin**
  **Otokuni-gun, Kyoto 618-8525 (JP)**
• **GOTO, Toshiharu**
  **Otokuni-gun, Kyoto 618-8525 (JP)**
• **SHINOMOTO, Sayaka**
  **Otokuni-gun, Kyoto 618-8525 (JP)**

(74) Representative: **Mewburn Ellis LLP**
**Aurora Building**
**Counterslip**
**Bristol BS1 6BX (GB)**

(54) **BASE POLYMER FOR ADHESIVE AGENT, ADHESIVE AGENT CONTAINING BASE POLYMER FOR ADHESIVE AGENT, AND ADHESIVE TAPE AND ADHESIVE FILM USING ADHESIVE AGENT**

(57)    A polymer suitable for use as a base polymer for an adhesive agent is provided. A base polymer for an adhesive agent is a polymer with a branch structure including a lactic acid unit, a caprolactone unit, and a polyalcohol unit with three or more hydroxyl groups, the proportion of the lactic acid unit being 20 to 50 mol %, the glass-transition temperature being not higher than -15 °C, wherein at least one of $F\alpha$ and $F\varepsilon$ represented by the expressions provided below is not less than 0.35: $F\alpha = I\alpha^*/(I\alpha+I\alpha^*)$, and $F\varepsilon = I\varepsilon^*/(I\varepsilon+I\varepsilon^*)$, where $I\alpha$, $I\alpha^*$, $I\varepsilon$ and $I\varepsilon^*$ are values obtained from a $^1$H-NMR spectrum of the base polymer for an adhesive agent.

*Fig.1*

**Description**

TECHNICAL FIELD

The present invention relates to a base polymer for an adhesive agent, an adhesive agent containing a base polymer for an adhesive agent, and an adhesive tape and an adhesive film using an adhesive agent, and, more particularly, to a base polymer for a polyester-based adhesive agent, an adhesive agent containing such a base polymer for an adhesive agent, and an adhesive tape and an adhesive film using such an adhesive agent.

BACKGROUND ART

The use of a copolymer made of a biodegradable polymer, such as polylactic acid, as an adhesive agent has been proposed. For example, JP 2011-88959 A discloses an adhesive sheet using a polyester that uses lactic acid and dibasic acid. Non-Patent Document 1 proposes the use of a copolymer of polylactic acid and polycaprolactone as an adhesive agent.

PRIOR ART DOCUMENTS

PATENT DOCUMENTS

Patent Document 1: JP 2011-88959 A

NON-PATENT DOCUMENTS

Non-Patent Document 1: Shinya Takahashi, "Proposal of Adhesive Agents Using Renewable Sources Containing Plant-Derived Ingredients", Convertech, Converting Technical Institute, February 2009, pp. 103-108
Non-Patent Document 2: Mengyuan Zhang et. al., "Synthesis of Poly(1-lactide-co-ε-caprolactone) Copolymer: Structure, Toughness, and Elasticity", Polymers 2021, 13, 1270, https://doi.org/10.3390/polym13081270

SUMMARY OF THE INVENTION

PROBLEMS TO BE SOLVED BY THE INVENTION

A problem to be solved by the present invention is to provide a polymer suitable for use as a base polymer for an adhesive agent, an adhesive agent, and an adhesive tape and an adhesive film.

MEANS FOR SOLVING THE PROBLEMS

A base polymer for an adhesive agent according to one embodiment of the present invention is a polymer with a branch structure including a lactic acid unit, a caprolactone unit, and a polyalcohol unit with three or more hydroxyl groups, a proportion of the lactic acid unit being 20 to 50 mol %, a glass-transition temperature being not higher than -15 °C,

wherein at least one of $F\alpha$ and $F\varepsilon$ represented by the expressions provided below is not less than 0.35:

$$F\alpha = I\alpha^*/(I\alpha + I\alpha^*),$$

and

$$F\varepsilon = I\varepsilon^*/(I\varepsilon + I\varepsilon^*),$$

where $I\alpha$, $I\alpha^*$, $I\varepsilon$ and $I\varepsilon^*$ are values obtained from a $^1$H-NMR spectrum of the base polymer for an adhesive agent,
$I\alpha$ is an integrated intensity of a signal derived from protons of a methylene group contained in a caprolactone unit and bonded to a carbonyl carbon of an ester bond and coupled to a caprolactone unit via the ester bond,
$I\alpha^*$ is an integrated intensity of a signal derived from protons of a methylene group contained in a caprolactone unit and bonded to a carbonyl carbon of an ester bond and coupled to a lactic acid unit via the ester bond,

$I\varepsilon$ is an integrated intensity of a signal derived from protons of a methylene group contained in a caprolactone unit and bonded to an oxygen of an ester bond and coupled to a caprolactone unit via the ester bond, and

$I\varepsilon^*$ is an integrated intensity of a signal derived from protons of a methylene group contained in a caprolactone unit and bonded to an oxygen of an ester bond and coupled to a lactic acid unit via the ester bond.

An adhesive agent according to one embodiment of the present invention includes the above-described base polymer for an adhesive agent. An adhesive tape according to one embodiment of the present invention is an adhesive tape using the above-described adhesive agent. An adhesive film according to one embodiment of the present invention is an adhesive film using the above-described adhesive agent.

EFFECTS OF THE INVENTION

The present invention provides a polymer suitable for use as a base polymer for an adhesive agent, an adhesive agent, and an adhesive tape and an adhesive film.

BRIEF DESCRIPTION OF THE DRAWINGS

[FIG. 1] FIG. 1 is an example of a $^1$H-NMR spectrum of a base polymer for an adhesive agent.
[FIG. 2A] FIG. 2A shows a portion of the chemical structure of the base polymer for an adhesive agent.
[FIG. 2B] FIG. 2B shows another portion of the chemical structure of the base polymer for an adhesive agent.
[FIG. 2C] FIG. 2C shows yet another portion of the chemical structure of the base polymer for an adhesive agent.
[FIG. 3] FIG. 3 is a flow chart of an exemplary method of manufacturing the base polymer for an adhesive agent.
[FIG. 4A] FIG. 4A schematically illustrates the manufacturing method of FIG. 3.
[FIG. 4B] FIG. 4B schematically illustrates the manufacturing method of FIG. 3.
[FIG. 4C] FIG. 4C schematically illustrates the manufacturing method of FIG. 3.

EMBODIMENTS FOR CARRYING OUT THE INVENTION

The present inventors investigated a way to improve the performance of a base polymer for a polyester-based adhesive agent, and obtained the following findings.

A preferable base polymer for an adhesive agent is a polymer with low glass-transition temperature. For example, the glass-transition temperature of polylactic acid is approximately 60 °C and thus, by itself, not suitable for use as a base polymer for an adhesive agent. The glass-transition temperature is effectively adjusted by using a copolymer with two or more polyester resins.

A preferable base polymer for an adhesive agent is a polymer with low crystallinity; a high crystallinity would promote solidification and thus decrease adhesiveness. To reduce crystallinity, it is preferable to use a random copolymer with two or more polyester resins that are randomly bonded.

Specifically, a polymer suitable for use as a base polymer for an adhesive agent is a polymer with a branch structure including a lactic acid unit, a caprolactone unit, and a polyalcohol unit, the proportion of the lactic acid unit being 20 to 50 mol %, the glass-transition temperature $Tg$ being not higher than -15 °C, wherein at least one of $F\alpha$ and $F\varepsilon$ represented by the expressions provided below is not less than 0.35:

$$F\alpha = I\alpha^*/(I\alpha + I\alpha^*),$$

and

$$F\varepsilon = I\varepsilon^*/(I\varepsilon + I\varepsilon^*),$$

where $I\alpha$, $I\alpha^*$, $I\varepsilon$ and $I\varepsilon^*$ are values obtained from a $^1$H-NMR spectrum of the polymer of interest.

$F\alpha$ and $F\varepsilon$ are indicative of the numbers of bonds of lactic acid units and caprolactone units (i.e., bonds of different units) in the polymer of interest, as will be described in detail further below. Higher $F\alpha$ and $F\varepsilon$ indicate more bonds of lactic acid units and caprolactone units.

Generally, a copolymer of polylactic acid and polycaprolactone is produced by ring-opening polymerization of L-lactide and ε-caprolactone. However, with this method, lactide, which has a higher reactivity than caprolactone, forms macromolecules first and then caprolactone forms macromolecules, resulting in block-type macromolecules. Thus, with this method, it is difficult to achieve $F\alpha$ and $F\varepsilon$ not lower than 0.35.

The present inventors discovered a method of manufacturing a polyester copolymer that is completely different from the above-described method. Specifically, they discovered that two or more polyester resins (not monomers, but polyester resins that are macromolecules) may be heated and stirred such that decomposition and production of ester bonds occur simultaneously, thereby producing a polyester copolymer. Further, they discovered that this method will increase $F\alpha$ and $F\varepsilon$. The present invention was made based on these findings. Now, embodiments of the present invention will be described in detail with reference to the drawings.

[Base Polymer for Adhesive Agent]

The base polymer for an adhesive agent according to one embodiment of the present invention is a polymer with a branch structure including a lactic acid unit, a caprolactone unit, and a polyalcohol unit with three or more hydroxyl groups, the proportion of the lactic acid unit being 20 to 50 mol %, the glass-transition temperature $Tg$ being not higher than -15 °C, wherein at least one of $F\alpha$ and $F\varepsilon$ represented by the expressions provided below is not less than 0.35:

$$F\alpha = Ia^*/(Ia + Ia^*),$$

and

$$F\varepsilon = I\varepsilon^*/(I\varepsilon + I\varepsilon^*),$$

where $I\alpha$, $Ia^*$, $I\varepsilon$ and $I\varepsilon^*$ are values obtained from a $^1$H-NMR spectrum of the base polymer for an adhesive agent. Details of $F\alpha$ and $F\varepsilon$ will be given further below.

[Structure]

The base polymer for an adhesive agent according to the present embodiment is a polymer with a branch structure including a lactic acid unit, a caprolactone unit, and a polyalcohol unit with three or more hydroxyl groups (hereinafter simply referred to as "polyalcohol unit").

A polyalcohol unit is a structural unit derived from an alcohol with three or more hydroxyl groups. As the polyalcohol unit is a structural unit derived from an alcohol with three or more hydroxyl groups, the base polymer for an adhesive agent will have a branch structure, thus improving cohesive force.

The alcohol with three or more hydroxyl groups is, for example, one or more selected from the group consisting of trimethylolpropane, glycerin, erythritol, pentaerythritol, glucose, acrylic polyol, polyester polyol, polyether polyol, epoxy polyol, polyolefin-based polyol, fluorine-containing polyol, and polyvinyl alcohol, where trimethylolpropane and pentaerythritol are preferable.

In the base polymer for an adhesive agent according to the present embodiment, the proportion of the lactic acid unit in the polymer is 20 to 50 mol %. Preferable properties of a base polymer for an adhesive agent cannot be obtained if the proportion of the lactic acid unit is too high or too low. A lower limit of the proportion of the lactic acid unit is preferably 30 mol %, and more preferably 40 mol %. An upper limit of the proportion of the lactic acid unit is preferably 48 mol %, and more preferably 46 mol %.

Although not limiting, the proportion of the caprolactone unit in the polymer is to be 40 to 80 mol %, for example. A lower limit of the proportion of the caprolactone unit is preferably 50 mol %, and more preferably 53 mol %. An upper limit of the proportion of the caprolactone unit is preferably 70 mol %, and more preferably 60 mol %.

The proportion of the polyalcohol unit in the polymer is preferably not higher than 0.55 mol %. If the proportion of the polyalcohol unit is too high, the polymer gels (i.e., foams) such that it cannot be used as a base polymer for an adhesive agent. An upper limit of the proportion of the polyalcohol unit is more preferably 0.50 mol %, and yet more preferably 0.45 mol %. On the other hand, if the proportion of the polyalcohol unit is too low, sufficient branch structures cannot be obtained, and thus an appropriate storage modulus may not be obtained. A lower limit of the proportion of the polyalcohol unit is preferably 0.20 mol %, and more preferably 0.30 mol %.

The base polymer for an adhesive agent according to the present embodiment may further contain other structural units other than the lactic acid unit, caprolactone unit, and polyalcohol unit. For example, the base polymer for an adhesive agent according to the present embodiment may contain other hydroxy carboxylic acid units other than the lactic acid unit and caprolactone unit. The base polymer for an adhesive agent according to the present embodiment may also contain structural units derived from a dihydric alcohol (e.g., ethylene glycol, diethylene glycol, triethylene glycol, 1,3-butanediol, propylene glycol, polypropylene glycol, pentanediol, polyethylene glycol, or tetraethylene glycol). The proportion of other structural units in the polymer other than the lactic acid unit, caprolactone unit, and polyalcohol unit is preferably not higher than 10 mol %, more preferably not higher than 5 mol %, and yet more preferably not higher than 1 mol %. The proportion of each unit in the polymer can be measured, for example, by $^1$H-NMR.

[Glass-Transition Temperature and Other Properties]

In the base polymer for an adhesive agent according to the present embodiment, the glass-transition temperature is not higher than -15 °C. If the glass-transition temperature is too high, the resulting product will not be suitable for use as a base polymer for an adhesive agent. The glass-transition temperature may be regulated by adjusting the molecular weight of the polymer and the ratio between the lactic acid unit and caprolactone unit in the polymer, for example. The glass-transition temperature is more preferably not higher than -20 °C, yet more preferably not higher than -25 °C, and still more preferably not higher than -30 °C. Although not limiting, a lower limit of glass-transition temperature -60 °C, for example.

In the base polymer for an adhesive agent according to the present embodiment, the number-average molecular weight, $Mn$, is preferably 10,000 to 30,000. A lower limit of number-average molecular weight $Mn$ is more preferably 12,000, and yet more preferably 13,000. An upper limit of number-average molecular weight $Mn$ is more preferably 25,000, and yet more preferably 20,000. In other words, the number-average molecular weight $Mn$ is more preferably 12,000 to 25,000, and most preferably 13,000 to 20,000.

In the base polymer for an adhesive agent according to the present embodiment, the weight-average molecular weight, $Mw$, is preferably 40,000 to 100,000. A lower limit of weight-average molecular weight Mwis more preferably 45,000, and yet more preferably 50,000. An upper limit of weight-average molecular weight $Mw$ is more preferably 90,000, and yet more preferably 80,000. In other words, the weight-average molecular weight Mwis more preferably 45,000 to 90,000, and most preferably 50,000 to 80,000.

In the base polymer for an adhesive agent according to the present embodiment, it is preferable that the number-average molecular weight $Mn$ is 10,000 to 30,000 and the weight-average molecular weight Mwis 40,000 to 100,000. A lower limit of number-average molecular weight $Mn$ is more preferably 12,000, and yet more preferably 13,000. An upper limit of number-average molecular weight $Mn$ is more preferably 25,000, and yet more preferably 20,000. A lower limit of weight-average molecular weight $Mw$ is more preferably 45,000, and yet more preferably 50,000. An upper limit of weight-average molecular weight $Mw$ is more preferably 90,000, and yet more preferably 80,000. In other words, it is more preferable that the number-average molecular weight $Mn$ is 12,000 to 25,000 and the weight-average molecular weight $Mw$ is 45,000 to 90,000, and it is most preferable that the number-average molecular weight $Mn$ is 13,000 to 20,000 and the weight-average molecular weight $Mw$ is 50,000 to 80,000.

In the base polymer for an adhesive agent according to the present embodiment, it is preferable that the number-average molecular weight $Mn$ is 10,000 to 30,000 and the degree of dispersion of the base polymer for an adhesive agent ($Mw/Mn$) is 1.0 to 10.0. Alternatively, in the base polymer for an adhesive agent according to the present embodiment, it is preferable that the weight-average molecular weight $Mw$ is 40,000 to 100,000 and the degree of dispersion ($Mw/Mn$) is 1.0 to 10.0. It is more preferable that the number-average molecular weight $Mn$ is 10,000 to 30,000, the weight-average molecular weight $Mw$ is 40,000 to 100,000 and the degree of dispersion ($Mw/Mn$) is 1.0 to 10.0.

In the base polymer for an adhesive agent according to the present embodiment, it is preferable that the number-average molecular weight $Mn$ is 10,000 to 30,000, the weight average molecule weight $Mw$ is 40,000 to 100,000, and the proportion of the polyalcohol unit is not more than 0.55 mol %.

The degree of dispersion ($Mw/Mn$) of the base polymer for an adhesive agent according to the present embodiment is 1.0 to 10.0, for example. A lower limit of degree of dispersion is preferably 1.5, and more preferably 2.0. An upper limit of degree of dispersion is preferably 8.0, and more preferably 6.0.

In the base polymer for an adhesive agent according to the present embodiment, the storage modulus at 20 °C is preferably $0.10 \times 10^5$ to $1.5 \times 10^5$ Pa. A lower limit of storage modulus is more preferably $0.20 \times 10^5$ Pa, and yet more preferably $0.50 \times 10^5$ Pa. An upper limit of storage modulus is more preferably $1.40 \times 10^5$ Pa, and yet more preferably $1.30 \times 10^5$ Pa.

[$F\alpha$ and $F\varepsilon$]

In the base polymer for an adhesive agent according to the present embodiment, at least one of $F\alpha$ and $F\varepsilon$ represented by the expressions provided below is not less than 0.35:

$$Fa = I\alpha^*/(I\alpha + I\alpha^*),$$

and

$$F\varepsilon = I\varepsilon^*/(I\varepsilon + I\varepsilon^*),$$

where $I\alpha$, $I\alpha^*$, $I\varepsilon$ and $I\varepsilon^*$ are values obtained from a $^1$H-NMR spectrum of the base polymer for an adhesive agent,

$I\alpha$ is the integrated intensity of a signal derived from the protons of a methylene group contained in a caprolactone unit and bonded to the carbonyl carbon of an ester bond and coupled to a caprolactone unit via the ester bond,

$I\alpha^*$ is the integrated intensity of a signal derived from the protons of a methylene group contained in a caprolactone unit and bonded to the carbonyl carbon of an ester bond and coupled to a lactic acid unit via the ester bond,

$I\varepsilon$ is the integrated intensity of a signal derived from the protons of a methylene group contained in a caprolactone unit and bonded to an oxygen of an ester bond and coupled to a caprolactone unit via the ester bond, and

$I\varepsilon^*$ is the integrated intensity of a signal derived from the protons of a methylene group contained in a caprolactone unit and bonded to an oxygen of an ester bond and coupled to a lactic acid unit via the ester bond.

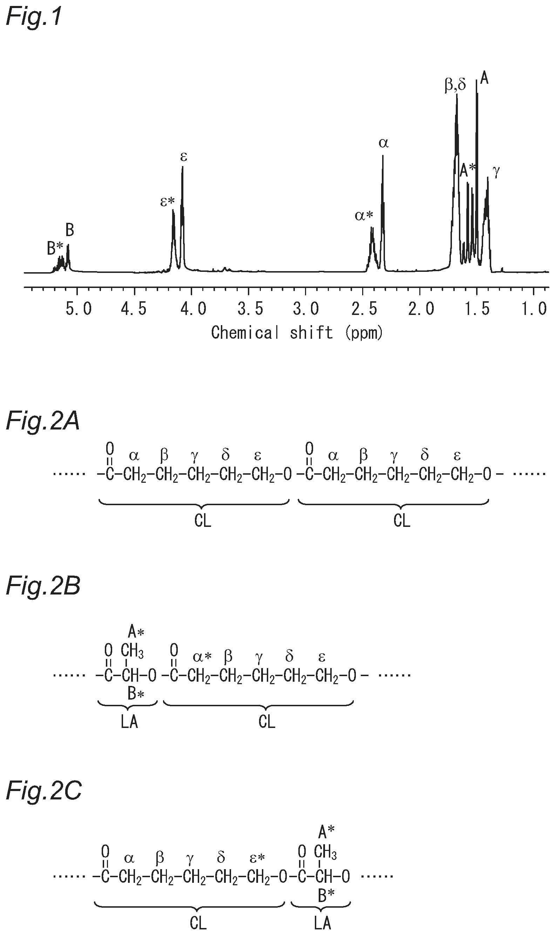

FIG. 1 is an example of a $^1$H-NMR spectrum of the base polymer for an adhesive agent. This $^1$H-NMR spectrum was obtained through measurement using an AVANCE NEO 700 MHz nuclear magnetic resonance (NMR) instrument from Bruker Corporation, where the base polymer for an adhesive agent was dissolved in deuterated chloroform to be in 10 mg/ml. The reference for chemical shifts was provided by tetramethylsilane (TMS).

In FIG. 1, $\alpha$, $\alpha^*$, $\beta$, $\gamma$, $\delta$, $\varepsilon$ and $\varepsilon^*$ denote signals derived from protons of methylene groups contained in the caprolactone unit. Further, A and A* denote signals derived from protons of methyl groups contained in the lactic acid unit, and B and B* denote signals derived from protons of methine groups contained in the lactic acid unit.

FIGS. 2A to 2C show portions of the chemical structure of the base polymer for an adhesive agent. As discussed above, the base polymer for an adhesive agent according to the present embodiment includes lactic acid units LA (FIGS. 2B and 2C), caprolactone units CL (FIGS. 2A to 2C), and polyalcohol units (not shown). As shown in FIG. 2A, a caprolactone unit CL has five methylene groups. These methylene groups will be referred to as position-$\alpha$, position-6, position-$\gamma$, position-6 and position-$\varepsilon$ methylene groups, starting with the one that is directly bonded to the carbonyl carbon of an ester bond.

The position-$\alpha$ methylene group is a methylene group bonded to the carbonyl carbon of an ester bond. The position-$\varepsilon$ methylene group is a methylene group bonded to the oxygen in an ester bond. The $\alpha$ to $\varepsilon$ signals in FIG. 1 are signals derived from protons of the position-$\alpha$ to -$\varepsilon$ methylene groups, respectively.

A signal derived from protons of a position-$\alpha$ methylene group appears at different chemical shifts depending on whether this methylene group is coupled to a caprolactone unit CL via an ester bond (see FIG. 2A) or coupled to a lactic acid unit LA (see FIG. 2B). A methylene group bonded to the carbonyl carbon of an ester bond and coupled to a lactic acid unit LA via this ester bond will be referred to as a position-$\alpha^*$ methylene group (see FIG. 2B). A methylene group coupled to a caprolactone unit CL via the relevant ester bond will be referred to as a position-$\alpha$ methylene group, as above (see FIG. 2A). The $\alpha^*$ signal in FIG. 1 is a signal derived from protons of a position-$\alpha^*$ methylene group. Specifically, the $\alpha$ signal appears at approximately 2.30 to 2.35 ppm, whereas the $\alpha^*$ signal appears at approximately 2.35 to 2.50 ppm.

Similarly, a signal derived from protons of a position-$\varepsilon$ methylene group appears at different chemical shifts depending on whether this methylene group is coupled to a caprolactone unit CL via an ester bond (see FIG. 2A) or coupled to a lactic acid unit LA (see FIG. 2C). A methylene group bonded to the oxygen in an ester bond and coupled to a lactic acid unit LA via this ester bond will be referred to as position-$\varepsilon^*$ methylene group (see FIG. 2C). A methylene group coupled to a caprolactone unit CL via the relevant ester bond will be referred to as a position-$\varepsilon$ methylene group, as above (see FIG. 2A). The $\varepsilon^*$ signal in FIG. 1 is a signal derived from protons of a position-$\varepsilon^*$ methylene group. Specifically, the $\varepsilon$ signal appears at approximately 4.00 to 4.10 ppm, whereas the $\varepsilon^*$ signal appears at approximately 4.10 to 4.20 ppm.

A signal derived from protons of a methyl group in a lactic acid unit LA is also observed as A or A* depending on whether the unit to which the ester bond is coupled is a lactic acid unit LA or a caprolactone unit CL. The A* signal relates to protons that were originally in the A signal but were then coupled to a caprolactone unit CL so as to be shifted from A to a lower magnetic field. Similarly, a signal derived from protons of a methine group in a lactic acid unit LA is also observed as B or B*.

$I\alpha$, $I\alpha^*$, $I\varepsilon$ and $I\varepsilon^*$ are the integrated intensities of the $\alpha$, $\alpha^*$, $\varepsilon$ and $\varepsilon^*$ signals, respectively. The integrated intensity of a signal in $^1$H-NMR is proportional to the number of protons. Thus, $I\alpha$, $I\alpha^*$ $I\varepsilon$ and $I\varepsilon^*$ are the amounts proportional to the numbers of protons of the position-$\alpha$, position-$\alpha^*$, position-$\varepsilon$ and position-$\varepsilon^*$ methylene groups, respectively.

Thus, $I\alpha$ is an amount proportional to the number of bonds of a caprolactone unit CL and a caprolactone unit CL (hereinafter referred to as "CL-CL bond"), and $I\alpha^*$ is an amount proportional to the number of bonds of a caprolactone unit CL and a lactic acid unit LA (hereinafter referred to as "CL-LA bond"). $F\alpha = I\alpha^*/(I\alpha + I\alpha^*)$ is the ratio of the number of CL-LA bonds to the sum of the number of CL-CL bonds and the number of CL-LA bonds.

Similarly, $I\varepsilon$ is an amount proportional to the number of CL-CL bonds, and $I\varepsilon^*$ is an amount proportional to the number of CL-LA bonds. $F\varepsilon = I\varepsilon^*/(I\varepsilon + I\varepsilon^*)$ is the ratio of the number of CL-LA bonds to the sum of the number of CL-CL bonds and the number of CL-LA bonds.

Higher $F\alpha$ and $F\varepsilon$ mean higher proportions of CL-LA bonds in a polymer. In other words, higher $F\alpha$ and $F\varepsilon$ mean that switching between a caprolactone unit CL and a lactic acid unit LA occurs more frequently, which means smaller blocks of continuous caprolactone units CL and lactic acid units LA.

In the base polymer for an adhesive agent according to the present embodiment, at least one of $F\alpha$ and $F\varepsilon$ is not less than 0.35 (i.e., not less than 35 %). Good adhesiveness is obtained if at least one of $F\alpha$ and $F\varepsilon$ is not less than 0.35. A lower limit of $F\alpha$ and $F\varepsilon$ is more preferably not less than 0.38, and yet more preferably not less than 0.40. It is sufficient if at least one of $F\alpha$ and $F\varepsilon$ is not less than 0.35, 0.38 or 0.40; more preferably, both $F\alpha$ and $F\varepsilon$ are not lower than 0.35, 0.38 or 0.40. Although not limiting, an upper limit of $F\alpha$ and $F\varepsilon$ is 0.80, for example, and preferably 0.60.

[Method of Manufacturing Base Polymer for Adhesive Agent]

Next, an exemplary method of manufacturing the base polymer for an adhesive agent according to the present embodiment will be described. The manufacturing method described below is merely illustrative, and the base polymer for an adhesive agent according to the present embodiment is not limited to one produced by this method.

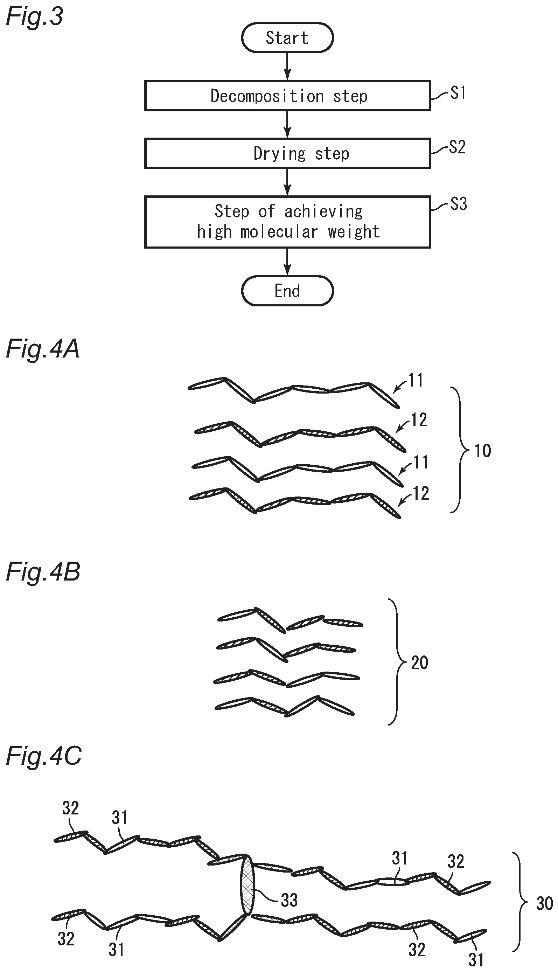

FIG. 3 is a flow chart of an exemplary method of manufacturing the base polymer for an adhesive agent. This manufacturing method includes a decomposition step (step S1), a drying step (step S2), and the step of achieving high molecular weight (step S3).

First, the manufacturing method of FIG. 3 will be outlined with reference to FIGS. 4A to 4C. In this manufacturing method, a starting material 10 containing polylactic acid 11 and polycaprolactone 12 is placed in a chemical reactor, where it is heated and stirred (Step S2; see FIG. 4A). Thus, decomposition and production of ester bonds occur simultaneously to produce a decomposition product 20, which is a polyester copolymer with low molecular weight (see FIG. 4B). The decomposition product 20 is dried (step S2) and, thereafter, a polyalcohol and a catalyst are added before heating and stirring in a reduced-pressure environment to achieve high molecular weight (step S3). This results in a polymer 30 with a branch structure including lactic acid units 31, caprolactone units 32 and polyalcohol units 33 (see FIG. 4C).

Alternatively, the polyalcohol and catalyst may be added at the decomposition step (step S1). Specifically, it is sufficient in the manufacturing method of FIG. 3 if a polyalcohol with three or more hydroxyl groups is added to the starting material or decomposition product during at least one of the decomposition step (step S1) and the step of achieving high molecular weight (step S3) and if a catalyst is added to the starting material or decomposition product during at least one of the decomposition step (step S1) and the step of achieving high molecular weight (step S3).

[Decomposition Step]

The various steps will now be described in detail. First, a starting material containing a first polyester resin and a second polyester resin that is a polyester resin different from the first polyester resin is placed in a chemical reactor, and heated to a temperature not lower than the melting point of that one of the polyester resins contained in the starting material which has the lowest melting point, and stirred, thus producing a decomposition product (decomposition step (step S1)).

In the present embodiment, the first polyester resin is polylactic acid and the second polyester resin is polycaprolactone. The starting material may contain other ingredients other than the first and second polyester resins. For example, the starting material may further contain a polyester resin different from both the first and second polyester resins. In the following passages, "mass of the polyester resin contained in the starting material" means the total mass of all polyester resins contained in the starting material.

For each of the first and second polyester resins, the weight-average molecular weight is preferably not lower than 10,000, and more preferably not lower than 20,000.

The proportion of the first polyester resin (i.e., polylactic acid) in the starting material is preferably not higher than 55 mass %. Although not limiting, a lower limit of the proportion of the first polyester resin (i.e., polylactic acid) is 40 mass %, for example, and is preferably 45 mass %.

Preferably, polyester resin that provides the starting material has been pre-processed into powder or pellets. Alternatively, crushing equipment may be provided at the starting material feeding port of the chemical reactor, where the starting material may be crushed at the same time as it is loaded. The two or more polyester resins may be consecutively loaded, one after another, or may be mixed in advance and loaded at once.

As discussed above, one or both of a polyalcohol (i.e., alcohol with three or more hydroxyl groups) and a catalyst (i.e., polymerization catalyst) may be added at the decomposition step (step S1).

The polyalcohol is to be an alcohol with three or more hydroxyl groups. The alcohol with three or more hydroxyl groups is to be, for example, one or more selected from the group consisting of trimethylolpropane, glycerin, erythritol, pentaerythritol, glucose, acrylic polyol, polyester polyol, polyether polyol, epoxy polyol, polyolefin-based polyol, fluorine-containing polyol, and polyvinyl alcohol, where trimethylolpropane and pentaerythritol are preferable. The polyalcohol is more preferably an alcohol with four or more hydroxyl groups.

Preferably, the amount of polyalcohol (i.e., polyalcohol with three or more hydroxyl groups; the same applies hereafter in this paragraph) that is to be added is 0.10 to 0.50 parts by mass (phr) relative to the polyester resins contained in the starting material, representing 100 parts by mass. A lower limit of the amount of polyalcohol to be added is preferably 0.20 parts by mass relative to the polyester resins contained in the starting material representing 100 parts by mass. An upper limit of the amount of polyalcohol to be added is preferably 0.40 parts by mass relative to the polyester resins contained in the starting material representing 100 parts by mass.

Additionally, it is preferable to add a dihydric alcohol in addition to the polyalcohol. The dihydric alcohol is to be, for example, selected from the group consisting of ethylene glycol, diethylene glycol, triethylene glycol, 1,3-butanediol, propylene glycol, polypropylene glycol, pentanediol, polyethylene glycol, and tetraethylene glycol, for example. Adding a dihydric alcohol in addition to the polyalcohol prevents excessive crosslinking during the step of achieving high molecular weight that would occur if only the polyalcohol were added. This inhibits crystallization of molecules, thereby producing a polymer with higher storage modulus. A preferable dihydric alcohol is polyethylene glycol. This produces the effect of lowering the glass transition temperature of the polymer.

An amount of dihydric alcohol that does not impair the effects of the invention may be added. Adding a dihydric alcohol will effectively prevent excessive crosslinking in the polymer without impairing a polymerization reaction of the polyalcohol and first and second polyester resins.

The catalyst is, for example, one or more selected from the group consisting of Zn, Sn, Fe, Al, Ti, Zn oxides, Sn oxides, Fe oxides, Al oxides, Ti oxides, organometallic salts of Zn, organometallic salts of Sn, organometallic salts of Fe, organometallic salts of Al, and organometallic salts of Ti, where Zn oxides and organometallic salts of Sn (e.g., tin octylate) are particularly preferable.

The amount of catalyst that is to be added, although depending on the type of catalyst, is preferably 0.01 to 10.0 parts by mass relative to the polyester resins contained in the starting material representing 100 parts by mass. A lower limit of the amount of catalyst to be added is preferably 0.1 parts by mass relative to the polyester resins contained in the starting material representing 100 parts by mass, more preferably 0.4 parts by mass, yet more preferably 0.8 parts by mass. An upper limit of the amount of catalyst to be added is preferably 5.0 parts by mass relative to the polyester resins contained in the starting material representing 100 parts by mass, and more preferably 3.0 parts by mass.

The chemical reactor is only required to be able to stir the starting material while heated. The chemical reactor is preferably capable of controlling the atmosphere within the chemical reactor. Specifically, the chemical reactor is preferably constructed to able to hermetically seal off the interior except for the feeding port and output port for the starting material, the gas inlet and exhaust (i.e., vent), and the filler hole for water, for example. The chemical reactor is preferably made of metal, glass or ceramic, and particularly preferably made of metal. The chemical reactor may be a batch reactor, or may be a continuous reactor.

At the decomposition step (step S1), the water content during decomposition, represented by the following expression, is preferably not lower than 0.015 (i.e., not lower than 1.5 %):

water content during decomposition = mass of water in chemical reactor / (mass of polyester resin contained in starting material + mass of polyalcohol + mass of catalyst)

In the above expression, "0" is substituted for "mass of polyalcohol" if no polyalcohol is added. Similarly, "0" is substituted for "mass of catalyst" if no catalyst is added.

If the water content during decomposition is too low, the polyester resin is not sufficiently decomposed, potentially making it difficult to increase $F_\alpha$ and $F_\varepsilon$. A lower limit of the water content during decomposition is more preferably 0.100 (i.e., 10.0 %), yet more preferably 1.000 (i.e., 100.0 %), and still more preferably 3.000 (i.e., 300.0 %). On the other hand, if the water content during decomposition is too high, this increases energy consumption for heating and drying. An upper limit of the water content during decomposition is preferably 10.000 (i.e., 1000.0 %), and more preferably 5.00 (i.e., 500.0 %).

The heating temperature for the decomposition step (step S1) (hereinafter referred to as "decomposition temperature") is a temperature not lower than the melting point of that one of the polyester resins contained in the starting material which has the lowest melting point. The higher the decomposition temperature, the more readily the reaction can proceed. A lower limit of decomposition temperature is preferably 150 °C, more preferably 200 °C, and yet more preferably 230 °C. The decomposition temperature may be not lower than the melting point of that one of the polyester resins contained in the starting material which has the highest melting point. On the other hand, if the decomposition temperature is too high, bonds other than ester bonds may break. An upper limit of decomposition temperature is preferably 300 °C, more preferably 280 °C, and yet more preferably 270 °C.

Although not limiting, the period of time of the decomposition step (step S1) (hereinafter referred to as "decomposition time") is preferably not less than 3 minutes. If the decomposition time is too short, the reaction may not proceed, making it impossible to increase $F_\alpha$ and $F_\varepsilon$. A lower limit of decomposition time is more preferably 30 minutes, yet more preferably 60 minutes, and still more preferably 90 minutes. An upper limit of decomposition time is preferably 8 hours, more preferably 6 hours, and yet more preferably 3 hours.

The shear rate during stirring for the decomposition step (step S1) is preferably 50 to 1,000,000/s. If the shear rate is too low, the reaction may not proceed, making it impossible to increase $F\alpha$ and $F\varepsilon$. On the other hand, if the shear rate is too high, bonds other than ester bonds may break. A lower limit of shear rate is more preferably 100/s, yet more preferably 1,000/s, and still more preferably 10,000/s. An upper limit of shear rate is more preferably 500,000/s, and yet more preferably 300,000/s.

[Drying Step]

The decomposition product obtained by the decomposition step (step S1) is dried (drying step (step S2)).

The drying step (step S2) may be performed in the reaction vessel used for the decomposition step (step S1), or may be performed after the decomposition product has been transferred to another container, for example. If the drying step (step S1) is performed using the reaction vessel used for the decomposition step (step S1), for example, after completion of the decomposition step (Step S1), the vent of the chemical reactor or the like may be operated with the high temperature after decomposition maintained, in order to discharge the water inside the chemical reactor in the form of steam, and the decomposition product may be held in this state for a predetermined period of time for drying.

At the drying step (step S2), drying is preferably done in such a manner that the water content after drying represented by the following expression is not higher than 0.0015 (i.e., not higher than 0.15 %):

water content after drying = mass of water contained in decomposition product / (mass of polyester resin contained in starting material + mass of polyalcohol + mass of catalyst)

In the above expression, "0" is substituted for "mass of polyalcohol" if no polyalcohol is added. Similarly, "0" is substituted for "mass of catalyst" if no catalyst is added.

If the water content after drying is too high, it may not be possible to increase the molecular weight at the step of achieving high molecular weight. An upper limit of the water content after drying is more preferably 0.0013 (i.e., 0.13 %), and yet more preferably 0.0012 (i.e., 0.12 %). The lower limit of the water content after drying is not limited to any particular value; to provide efficiency, an upper limit is preferably 0.0001 (i.e., 0.01 %), more preferably 0.0005 (i.e., 0.05 %), and yet more preferably 0.0008 (i.e., 0.08 %).

The heating temperature for the drying step (step S2) is preferably 80 to 140 °C. If the heating temperature is too low, drying must be performed for a long period of time to reduce the water content. On the other hand, if the drying temperature is too high, the decomposition product may volatilize, leading to lower yield.

Although not limiting, the time of the drying step (step S2) is preferably 30 to 160 minutes.

[Step of Achieving High Molecular Weight]

After the drying step (step S2), the decomposition product is heated in a reduced-pressure environment, and stirred (step of achieving high molecular weight (step S3)).

The step of achieving high molecular weight (step S3) may be performed in the reaction vessel used for the decomposition step (step S1), or may be performed after the decomposition product has been transferred to another container, for example.

If no polyalcohol nor catalyst was added to the starting material at the decomposition step (step S1), a polyalcohol and a catalyst are added to the decomposition product at the step of achieving high molecular weight (step S3). As discussed above, in the manufacturing method of FIG. 3, it is sufficient if a polyalcohol with three or more hydroxyl groups is added to the starting material or decomposition product during at least one of the decomposition step (step S1) and the step of achieving high molecular weight (step S3) and a catalyst is added to the starting material or decomposition product during at least one of the decomposition step (step S1) and the step of achieving high molecular weight (step S3). The same preferable amounts to be added, for example, apply here as in implementations where addition occurs at the decomposition step (step S1).

The heating temperature for the step of achieving high molecular weight (step S3) (hereinafter referred to as "polymerization temperature") is preferably 160 to 250 °C. If the polymerization temperature is too high, the decomposition product may volatilize, leading to lower yield. Further, higher temperatures may cause heat decomposition of the polymer. On the other hand, if the polymerization temperature is too low, it may not be possible to sufficiently increase the molecular weight of the polymer. A lower limit of polymerization temperature is more preferably 210 °C, and yet more preferably 220 °C. An upper limit of polymerization temperature is more preferably 240 °C.

The period of time of the step of achieving high molecular weight (step S3) (hereinafter referred to as "polymerization time") is preferably 30 to 480 minutes. If the polymerization time is too short, it may not be possible to sufficiently increase the molecular weight of the polymer. On the other hand, if the polymerization time is too long, the polymer may gel (i.e., foam). Further, if the polymerization time is too long, the molecular weight may become too high. If the molecular weight is too high, the glass-transition temperature and/or storage modulus may become excessively high. A lower limit of polymerization time is more preferably 60 minutes, and yet more preferably 90 minutes. An upper limit of polymerization time is more preferably 360 minutes, and yet more preferably 300 minutes.

The shear rate during stirring for the step of achieving high molecular weight (step S3) is preferably 50 to 1,000,000/s. If the shear rate is too low, transesterification may not proceed, making it impossible to increase $F\alpha$ and $F\varepsilon$. On the other hand, if the shear rate is too high, bonds other than ester bonds may break. A lower limit of shear rate is more preferably 100/s, yet more preferably 1,000/s, and still more preferably 10,000/s. An upper limit of shear rate is more preferably 500,000/s, and yet more preferably 300,000/s.

The degree of vacuum for the step of achieving high molecular weight (step S3) is preferably not higher than 1500 Pa. The degree of vacuum is more preferably not higher than 1200 Pa, and yet more preferably not higher than 1000 Pa.

The above steps result in a polymer with a branch structure including a lactic acid unit, a caprolactone unit and a polyalcohol unit (i.e., base polymer for an adhesive agent).

[Effects of Present Embodiment and Other Statements]

A base polymer for an adhesive agent according to one embodiment of the present invention has been described. The base polymer for an adhesive agent according to the present embodiment is a polymer with a branch structure including a lactic acid unit, a caprolactone unit, and a polyalcohol unit with three or more hydroxyl groups, the proportion of the lactic acid unit being 20 to 50 mol %, the glass-transition temperature being not higher than -15 °C, wherein at least one of $F\alpha$ and $F\varepsilon$ is not less than 0.35. The base polymer for an adhesive agent according to the present embodiment provides properties suitable for use as an adhesive agent.

The base polymer for an adhesive agent according to the present embodiment may be used, for example, as a material for an adhesive agent forming an adhesive layer of an adhesive tape or an adhesive film. An adhesive agent may be prepared by, for example, adding dilution solvent, crosslinking agent (e.g., HDI) and/or other additives (e.g., tackifier) as necessary to the base polymer for an adhesive agent according to the present embodiment. An adhesive tape and an adhesive film may be produced by, for example, applying an adhesive agent to a sheet-shaped or film-shaped substrate before drying.

A product fabricated by the present invention etc. are capable of enabling effective use of resources and energy, utilization of renewable sources, and reduction of environmental impact. Offering the present invention to the society will contribute to achieving one of the 17 Sustainable Development Goals (SDGs) established by the United Nations, namely, Goal 12: "responsible consumption and production".

EXAMPLES

Now, the present invention will be described more specifically by means of examples. The present invention is not limited to these examples.

Polyester resins were subjected to decomposition, drying, and the step of achieving high molecular weight under the conditions shown in Tables 1 and 2 to produce polymers.

[Table 1]

TABLE 1

| | | | Inv. Ex. 1 | Inv. Ex. 2 | Inv. Ex. 3 | Comp. Ex. 1 | Comp. Ex. 2 |
|---|---|---|---|---|---|---|---|
| Decomposition | Resin mixture 1 | Type | PLA | PLA | PLA | PLA | PLA |
| | | Amount (parts by mass) | 50 | 50 | 50 | 20 | 80 |
| | Resin mixture 2 | Type | PCL | PCL | PCL | PCL | PCL |
| | | Amount (parts by mass) | 50 | 50 | 50 | 80 | 20 |
| | Polyalcohol | Type | – | – | – | – | – |
| | | Amount (parts by mass) | – | – | – | – | – |
| | Catalyst | Type | – | – | – | – | – |
| | | Amount (parts by mass) | – | – | – | – | – |
| | Water content during decomposition (%) | | 350.0 | 350.0 | 350.0 | 350.0 | 350.0 |
| | Decomposition temp. (°C) | | 250 | 250 | 250 | 250 | 250 |
| | Decomposition time (min) | | 90 | 90 | 90 | 90 | 90 |
| | Shear rate (1/s) | | 25,133 | 25,133 | 25,133 | 25,133 | 25,133 |
| Drying | Water content after drying (%) | | 0.11 | 0.11 | 0.11 | 0.11 | 0.11 |
| High molecular weight | Polyalcohol | Type | A1 | A2 | A1 | A1 | A1 |
| | | Amount (parts by mass) | 0.3 | 0.3 | 0.5 | 0.3 | 0.3 |
| | Catalyst | Type | C1 | C1 | C1 | C1 | C1 |
| | | Amount (parts by mass) | 1 | 1 | 1 | 1 | 1 |
| | Polymerization temp. (°C) | | 230 | 230 | 230 | 230 | 230 |
| | Polymerization time (min) | | 120 | 150 | 120 | 120 | 120 |
| | Degree of vacuum (Pa) | | 800.0 | 800.0 | 800.0 | 800.0 | 800.0 |
| | Shear rate (1/s) | | 25,133 | 25,133 | 25,133 | 25,133 | 25,133 |

[Table 2]

TABLE 2

| | | | Comp. Ex. 3 | Comp. Ex. 4 | Comp. Ex. 5 | Comp. Ex. 6 | Comp. Ex. 7 |
|---|---|---|---|---|---|---|---|
| Decomposition | Resin mixture 1 | Type | PLA | PLA | PLA | PLA | PLA |
| | | Amount (parts by mass) | 50 | 50 | 50 | 50 | 50 |
| | Resin mixture 2 | Type | PCL | PCL | PCL | PCL | PCL |
| | | Amount (parts by mass) | 50 | 50 | 50 | 50 | 50 |
| | Polyalcohol | Type | – | – | – | – | – |
| | | Amount (parts by mass) | – | – | – | – | – |
| | Catalyst | Type | – | – | – | – | – |
| | | Amount (parts by mass) | – | – | – | – | – |
| | Water content during decomposition (%) | | 350.0 | 1.0 | 1.0 | 350.0 | 350.0 |
| | Decomposition temp. (°C) | | 250 | 250 | 250 | 250 | 250 |
| | Decomposition time (min) | | 90 | 90 | 90 | 90 | 90 |
| | Shear rate (1/s) | | 25,133 | 25,133 | 25,133 | 25,133 | 25,133 |
| Drying | Water content after drying (%) | | 0.11 | 0.11 | 0.11 | 0.11 | 0.11 |
| High molecular weight | Polyalcohol | Type | A1 | A1 | A1 | – | – |
| | | Amount (parts by mass) | 0.51 | 0.3 | 0.3 | – | – |
| | Catalyst | Type | C1 | C1 | C1 | C1 | C1 |
| | | Amount (parts by mass) | 1 | 1 | 1 | 1 | 1 |
| | Polymerization temp. (°C) | | 230 | 230 | 230 | 230 | 230 |
| | Polymerization time (min) | | 120 | 120 | 60 | 120 | 1200 |
| | Degree of vacuum (Pa) | | 800.0 | 800.0 | 800.0 | 800.0 | 800.0 |
| | Shear rate (1/s) | | 25,133 | 25,133 | 25,133 | 25,133 | 25,133 |

In Tables 1 and 2, "PLA" denotes a polylactic acid with a number-average molecular weight of 78,000 and a weight-average molecular weight of 120,000, and "PCL" denotes a polycaprolactone with a number-average molecular weight of 15,000 and a weight-average molecular weight of 25,000. The melting point of the polylactic acid was approximately 170 °C and the melting point of the polycaprolactone was approximately 60 °C.

In Tables 1 and 2, "A1" denotes pentaerythritol, and "A2" denotes trimethylolpropane. In Tables 1 and 2, "C1" denotes tin octylate, and "C2" denotes ZnO.

Various physical properties of the produced polymers were measured.

The proportions (in mol %) of the lactic acid unit, caprolactone unit and polyalcohol unit were determined through analysis using proton nuclear magnetic resonance ($^1$H-NMR). $^1$H-NMR spectra were measured using an ECA 500 MHz nuclear magnetic resonance (NMR) instrument from JEOL Ltd., an AVANCE III HD 400 MHz nuclear magnetic resonance instrument from Bruker Corporation, and an AVANCE NEO 700 MHz nuclear magnetic resonance instrument from Bruker Corporation, where the base polymer for an adhesive agent was dissolved in deuterated chloroform to be 10 mg/ml. The reference for chemical shifts was provided by tetramethylsilane (TMS).

Number-average molecular weight Mn and weight-average molecular weight *Mw* were measured by dissolving the produced polymer in tetrahydrofuran to be 0.5 wt.%, and performing gel permeation chromatography (GPC), where polystyrene served as the standard substance.

Glass-transition temperature *Tg* and heat of fusion were measured by differential scanning calorimetry (DSC). Using a DSC, the temperature was raised from -80 °C to 200 °C at a rate of temperature increase of 10 °C/min to delete the thermal history; thereafter, the temperature was lowered to -80 °C at a rate of temperature decrease of 10 °C/min, and a measurement was made during another temperature increase at a rate of 10 °C/min. Heat of fusion was calculated from the area of the endothermic peak appearing in a DTA during the second temperature increase. The temperature indicative of the inflection point in the transition region appearing in a DTA during the second temperature increase was treated as the glass-transition temperature *Tg*.

$^1$H-NMR spectra were observed to determine whether there was a copolymer, and $F\alpha$ and $F\varepsilon$ were determined.

The storage modulus at 20 °C was measured in the following manner: an MCR 301 viscoelasticity testing instrument from Anton Paar GmbH was used to make a measurement on a test sample of a thickness of 0.5 mm on a parallel plate with a diameter of 8 mm, and the storage modulus at 20 °C was measured with a frequency of 1 Hz and a strain of 1 %.

For some specimens, an adhesive tape was fabricated from the polymer (i.e., base polymer for an adhesive agent) and its peel resistance (i.e., adhesive force) was determined. Specifically, first, the produced polymer of 100 parts by weight was dissolved in ethyl acetate of 100 parts by weight, and isocyanate of 1 part by weight was then added to prepare an adhesive agent. This adhesive agent was applied to a polyethylene terephthalate (PET) film and heated at a temperature of 100 °C for 3 minutes to dry the solvent, and was held at a temperature of 40 °C for 72 hours to crosslink and harden the layer of adhesive agent to fabricate an adhesive tape.

The fabricated adhesive tape was cut into strips, each with a length of 150 mm and a width of 25 mm, to fabricate a specimen for measurement. The MD direction of the adhesive tape (i.e., direction in which the adhesive agent is applied) was treated as the length direction of the specimen for measurement, and the direction perpendicular thereto as the width direction of the specimen for measurement. A stainless-steel sheet (SUS 304BA sheet) was prepared to serve as an object to which the adhesive tape was to be adhered. In an environment at a temperature of 23 °C and a humidity of 50 %, the release liner was peeled from the adhesive tape and the exposed surface of the layer of adhesive agent was laid upon one of the surfaces of the above-mentioned object, a 2 kg roller was rolled back and forth once to apply pressure to bond the surfaces together, and the bonded assembly was left for 20 minutes. The length of the bonded section was 80 mm. Thereafter, a tension tester was used to peel the adhesive tape from the object by the 180° peeling method in accordance with JIS Z0237:2009 at a peel rate of 300 mm/min and with a peel angle of 180°, thereby measuring the adhesive force (in N/25 mm).

The results are shown in Tables 3 and 4.

[Table 3]

TABLE 3

| | Inv. Ex. 1 | Inv. Ex. 2 | Inv. Ex. 3 | Comp. Ex. 1 | Comp. Ex. 2 |
|---|---|---|---|---|---|
| LA (mol %) | 41.88 | 44.06 | 45.94 | 19.43 | 79.81 |
| CL (mol %) | 57.79 | 55.52 | 53.56 | 80.25 | 19.95 |
| A2 (mol %) | – | 0.42 | – | – | – |
| A1 (mol %) | 0.33 | – | 0.5 | 0.32 | 0.24 |
| Gelled (foamed) or not | no | no | no | no | no |
| Fα (%) | 39.7 | 43.7 | 42.3 | 12.6 | 56.3 |
| Fε (%) | 43.3 | 43.9 | 45.3 | 11.7 | 56.7 |
| Tg (°C) | −34.6 | −35.5 | −25.2 | −32.6 | 26.2 |
| Mn | 14,969 | 15,257 | 18,356 | 14,026 | 14,565 |
| Mw | 71,966 | 44,099 | 58,563 | 28,193 | 46,925 |
| Degree of dispersion | 4.8 | 2.9 | 2.9 | 2.0 | 3.2 |
| Heat of fusion (J/g) | 0 | 0 | 0 | 10.5 | 9.8 |
| Storage modulus ($10^5$ Pa) | 0.7 | 1.03 | 1.2 | 42 | 53 |
| Adhesive force (N/25 mm) | 9.1 | – | – | – | – |

[Table 4]

TABLE 4

| | Comp. Ex. 3 | Comp. Ex. 4 | Comp. Ex. 5 | Comp. Ex. 6 | Comp. Ex. 7 | Ex. for Ref. |
|---|---|---|---|---|---|---|
| LA (mol %) | 41.78 | 45.00 | 45.00 | 46.64 | 43.67 | 68.55 |
| CL (mol %) | 57.65 | 54.67 | 54.67 | 53.36 | 55.99 | 31.45 |
| A2 (mol %) | – | – | – | – | – | – |
| A1 (mol %) | 0.57 | 0.33 | 0.33 | – | 0.34 | – |
| Gelled (foamed) or not | **yes** | no | no | no | no | no |
| $F\alpha$ (%) | – | 10.0 | 10.0 | 31.6 | 42.6 | 31.70 |
| $F\varepsilon$ (%) | – | 10.0 | 10.0 | 32.4 | 43.6 | 31.96 |
| Tg (°C) | – | 25.0 | −15.6 | −15.2 | 2.7 | −12.8 |
| Mn | – | 13,536 | 3,536 | 11,643 | 53,536 | 20,330 |
| Mw | – | 62,657 | 6,576 | 46,363 | 145,636 | 43,790 |
| Degree of dispersion | – | 4.6 | 1.8 | 4.0 | 2.7 | 2.15 |
| Heat of fusion (J/g) | – | 2.74 | 0 | 0 | 0 | – |
| Storage modulus ($10^5$ Pa) | – | 35 | 0.05 | 0.09 | 47 | – |
| Adhesive force (N/25 mm) | – | – | – | – | – | – |

In Tables 3 and 4, "LA" denotes the lactic acid unit, "CL" denotes the caprolactone unit, "A1" denotes a polyalcohol unit derived from pentaerythritol, and "A2" denotes a polyalcohol unit derived from trimethylolpropane.

As shown in Table 3, the polymers of Inventive Examples 1 to 3 had proportions of the lactic acid unit ranging from 20 to 50 mol %, glass-transition temperatures $Tg$ not higher than -15 °C, and values of $F\alpha$ and $F\varepsilon$ not lower than 35 %. These polymers had storage moduli at 20 °C in the range of $0.10\times10^5$ to $1.5\times10^5$, and thus had properties suitable for use as a base polymer for an adhesive agent.

The polymer of Comparative Example 1 had a high storage modulus. This is presumably because the proportion of the lactic acid unit was too low or $F\alpha$ and $F\varepsilon$ were too low. The proportion of the lactic acid unit was low presumably because the proportion of polylactic acid in the starting material was too low. The low proportion of the lactic acid unit is thought to have decreased PLA-PCL bonds such that crystallized portions remained, increasing storage modulus.

The polymer of Comparative Example 2 had a high storage modulus. It also had a high glass-transition temperature $Tg$. This is presumably because the proportion of the lactic acid unit was too high. The proportion of the lactic acid unit was high presumably because the proportion of polylactic acid in the starting material was high. It is assumed that, since the proportion of the lactic acid unit was high (i.e., the proportion of the caprolactone unit was low), long series of bonded lactic acid units were easily produced while caprolactone units were finely dispersed; thus, crystallized portions remained, which increased storage modulus.

The polymer of Comparative Example 3 gelled (i.e., foamed) during the step of achieving high molecular weight. This is presumably because of too large an amount of polyalcohol added.

The polymers of Comparative Examples 4 and 5 had high storage moduli even though their proportions of the lactic acid unit and caprolactone unit, molecular weights and other conditions were substantially the same as those of Inventive Examples 1 to 3. This is presumably because $F\alpha$ and $F\varepsilon$ were too low. $F\alpha$ and $F\varepsilon$ were low presumably because the water content during decomposition was low or the polymerization time was short.

The polymer of Comparative Example 6 had a low storage modulus. This is presumably because the polymer of Comparative Example 6 contained no polyalcohol unit.

The polymer of Comparative Example 7 had a high storage modulus. It also had a high glass-transition temperature $Tg$. This is presumably because the polymerization time was too long, leading to too high a molecular weight.

For the example for reference in Table 3, $F\alpha$ and $F\varepsilon$ were deter mined from the data "PLCL (1:1-18 h)" of the $^1$H-NMR spectra in FIG. 2B in Non-Patent Document 2 (Mengyuan Zhang et. al., "Synthesis of Poly(l-lactide-co-ε-caprolactone) Copolymer: Structure, Toughness, and El asticity", Polymers 2021, 13, 1270, https://doi.org/10.3390/polym1308127 0).

In Non-Patent Document 2, these copolymers were fabricated through ring-opening polymerization of L-lactide and ε-caprolactone. "PLCL (1:1-18)" is data obtained by loading L-lactide and ε-caprolactone in a mixture ratio (i.e., molar ratio) of 1:1, followed by polymerization for 18 hours. It is to be noted that, while Non-Patent Document 2 also discloses data for polymerization times of 24 hours and 30 hours, the values of $F\alpha$ and $F\varepsilon$ were the largest in the data for the polymerization time of 18 hours ($F\alpha$ in the data for 24 hours was 25.2 %, and $F\alpha$ in the data for 36 hours was 23.9 %). Furthermore, while Non-Patent Document 2 also discloses data obtained by producing copolymers with mixture ratios (i.e., molar ratios) of L-lactide and ε-caprolactone of 2:1 and 3:1, The proportions of the lactic acid unit in these copolymers were even higher than those for the example for reference.

In the example for reference, even though the proportion of the lactic acid unit was higher than those for Inventive Examples 1 to 3, $F\alpha$ and $F\varepsilon$ were less than 35 %. This shows that increasing $F\alpha$ and $F\varepsilon$ is difficult with conventional methods where copolymers are produced through ring-opening polymerization of L-lactide and ε-caprolactone.

Although embodiments of the present invention have been described, the present invention is not limited to the above-described embodiments, and various modifications are possible within the scope of the invention.

## Claims

1. A base polymer for an adhesive agent, the base polymer being a polymer with a branch structure including a lactic acid unit, a caprolactone unit, and a polyalcohol unit with three or more hydroxyl groups,

   a proportion of the lactic acid unit being 20 to 50 mol %,
   a glass-transition temperature being not higher than -15 °C,
   wherein at least one of $F\alpha$ and $F\varepsilon$ represented by the expressions provided below is not less than 0.35:

   $$F\alpha = I\alpha^*/(I\alpha + I\alpha^*), \text{ and}$$

   $$F\varepsilon = I\varepsilon^*/(I\varepsilon + I\varepsilon^*),$$

   where $I\alpha$, $I\alpha^*$, $I\varepsilon$ and $I\varepsilon^*$ are values obtained from a $^1$H-NMR spectrum of the base polymer for an adhesive agent,
   $I\alpha$ is an integrated intensity of a signal derived from protons of a methylene group contained in a caprolactone unit and bonded to a carbonyl carbon of an ester bond and coupled to a caprolactone unit via the ester bond,
   $I\alpha^*$ is an integrated intensity of a signal derived from protons of a methylene group contained in a caprolactone unit and bonded to a carbonyl carbon of an ester bond and coupled to a lactic acid unit via the ester bond,
   $I\varepsilon$ is an integrated intensity of a signal derived from protons of a methylene group contained in a caprolactone unit and bonded to an oxygen of an ester bond and coupled to a caprolactone unit via the ester bond, and
   $I\varepsilon^*$ is an integrated intensity of a signal derived from protons of a methylene group contained in a caprolactone unit and bonded to an oxygen of an ester bond and coupled to a lactic acid unit via the ester bond.

2. The base polymer for an adhesive agent according to claim 1, wherein both $F\alpha$ and $F\varepsilon$ are not lower than 0.35.

3. The base polymer for an adhesive agent according to claim 1, wherein a number-average molecular weight, $Mn$, is 10,000 to 30,000.

4. The base polymer for an adhesive agent according to claim 1, wherein a weight-average molecular weight, $Mw$, is 40,000 to 100,000.

5. The base polymer for an adhesive agent according to claim 1, wherein a number-average molecular weight, $Mn$, is 10,000 to 30,000, and a weight-average molecular weight, $Mw$, is 40,000 to 100,000.

6. The base polymer for an adhesive agent according to claim 1, wherein a degree of dispersion, $Mw/Mn$, is 1.0 to 10.0.

7. The base polymer for an adhesive agent according to claim 6, wherein a number-average molecular weight, $Mn$, is 10,000 to 30,000.

8. The base polymer for an adhesive agent according to claim 6, wherein a weight-average molecular weight, $Mw$, is 40,000 to 100,000.

9. The base polymer for an adhesive agent according to claim 6, wherein a number-average molecular weight, *Mn,* is 10,000 to 30,000, and a weight-average molecular weight, *Mw,* is 40,000 to 100,000.

10. The base polymer for an adhesive agent according to claim 1, wherein a proportion of the polyalcohol unit is not higher than 0.55 mol %.

11. The base polymer for an adhesive agent according to claim 1, wherein a number-average molecular weight, *Mn,* is 10,000 to 30,000, a weight-average molecular weight, *Mw,* is 40,000 to 100,000, and a proportion of the polyalcohol unit is not higher than 0.55 mol %.

12. The base polymer for an adhesive agent according to claim 1, wherein the polyalcohol unit with three or more hydroxyl groups is a structural unit derived from at least one of trimethylolpropane and pentaerythritol.

13. The base polymer for an adhesive agent according to claim 1, wherein a storage modulus at 20 °C is $0.10 \times 10^5$ to $1.5 \times 10^5$ Pa.

14. An adhesive agent including the base polymer for an adhesive agent according to any one of claims 1 to 13.

15. An adhesive tape using the adhesive agent according to claim 14.

16. An adhesive film using the adhesive agent according to claim 14.

*Fig.1*

*Fig.2A*

*Fig.2B*

*Fig.2C*

*Fig.3*

```
        ┌─────────────┐
        │    Start    │
        └─────────────┘
               │
               ▼
   ┌───────────────────────┐  ┐
   │  Decomposition step   │  ├─ S1
   └───────────────────────┘  ┘
               │
               ▼
   ┌───────────────────────┐  ┐
   │     Drying step       │  ├─ S2
   └───────────────────────┘  ┘
               │
               ▼
   ┌───────────────────────┐  ┐
   │  Step of achieving    │  ├─ S3
   │ high molecular weight │  │
   └───────────────────────┘  ┘
               │
               ▼
        ┌─────────────┐
        │     End     │
        └─────────────┘
```

*Fig.4A*

*Fig.4B*

*Fig.4C*

## INTERNATIONAL SEARCH REPORT

| International application No. |
|---|
| **PCT/JP2024/026871** |

### A. CLASSIFICATION OF SUBJECT MATTER

*C08G 63/08*(2006.01)i; *C08G 63/80*(2006.01)i; *C08G 63/91*(2006.01)i; *C09J 7/30*(2018.01)i; *C09J 167/04*(2006.01)i
FI: C08G63/08; C08G63/80; C08G63/91; C09J167/04; C09J7/30

According to International Patent Classification (IPC) or to both national classification and IPC

### B. FIELDS SEARCHED

Minimum documentation searched (classification system followed by classification symbols)

C08G63/08; C08G63/80; C08G63/91; C09J167/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2019/035357 A1 (TORAY INDUSTRIES, INC.) 21 February 2019 (2019-02-21) | 1-16 |
| A | JP 2022-77948 A (TORAY INDUSTRIES, INC.) 24 May 2022 (2022-05-24) | 1-16 |
| A | JP 2018-524428 A (ETHICON, INC.) 30 August 2018 (2018-08-30) | 1-16 |
| A | JP 2016-519202 A (SAUDI BASIC INDUSTRIES CORPORATION) 30 June 2016 (2016-06-30) | 1-16 |
| A | WO 2020/241624 A1 (TORAY INDUSTRIES, INC.) 03 December 2020 (2020-12-03) | 1-16 |
| A | WO 2010/110460 A1 (NATIONAL UNIVERSITY CORPORATION NAGOYA UNIVERSITY) 30 September 2010 (2010-09-30) | 1-16 |
| A | WO 2014/167966 A1 (NATIONAL UNIVERSITY CORPORATION KYOTO INSTITUTE OF TECHNOLOGY) 16 October 2014 (2014-10-16) | 1-16 |
| A | CN 112625228 A (TONGJI UNIVERSITY) 09 April 2021 (2021-04-09) | 1-16 |

☑ Further documents are listed in the continuation of Box C.     ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **24 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/026871** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022/195019 A1 (SULZER MANAGEMENT AG) 22 September 2022 (2022-09-22) | 1-16 |
| A | JP 2018-532844 A (PURAC BIOCHEM BV) 08 November 2018 (2018-11-08) | 1-16 |
| A | JP 8-92359 A (TOYO BOSEKI KABUSHIKI KAISHA) 09 April 1996 (1996-04-09) | 1-16 |

Form PCT/ISA/210 (second sheet) (July 2022)

## INTERNATIONAL SEARCH REPORT
### Information on patent family members

International application No.

**PCT/JP2024/026871**

| Patent document cited in search report | | | Publication date (day/month/year) | Patent family member(s) | | | Publication date (day/month/year) |
|---|---|---|---|---|---|---|---|
| WO | 2019/035357 | A1 | 21 February 2019 | JP | 2023-106608 | A | |
| | | | | US | 2020/0216607 | A1 | |
| | | | | EP | 3670567 | A1 | |
| | | | | CN | 111032726 | A | |
| | | | | KR | 10-2020-0041857 | A | |
| JP | 2022-77948 | A | 24 May 2022 | (Family: none) | | | |
| JP | 2018-524428 | A | 30 August 2018 | US | 2016/0354510 | A1 | |
| | | | | US | 2018/0326114 | A1 | |
| | | | | WO | 2016/196046 | A1 | |
| | | | | AU | 2016270767 | A | |
| | | | | CA | 2987908 | A1 | |
| | | | | CN | 107683302 | A | |
| | | | | MX | 2017015576 | A | |
| | | | | BR | 112017025526 | A | |
| | | | | MA | 44203 | A | |
| JP | 2016-519202 | A | 30 June 2016 | US | 2016/0083510 | A1 | |
| | | | | WO | 2014/188344 | A1 | |
| | | | | CN | 105408387 | A | |
| | | | | KR | 10-2016-0040469 | A | |
| | | | | BR | 112015028801 | A | |
| WO | 2020/241624 | A1 | 03 December 2020 | US | 2022/0251372 | A1 | |
| | | | | EP | 3978569 | A1 | |
| | | | | CN | 113874442 | A | |
| WO | 2010/110460 | A1 | 30 September 2010 | (Family: none) | | | |
| WO | 2014/167966 | A1 | 16 October 2014 | US | 2016/0053049 | A1 | |
| | | | | EP | 2985302 | A1 | |
| CN | 112625228 | A | 09 April 2021 | (Family: none) | | | |
| WO | 2022/195019 | A1 | 22 September 2022 | JP | 2024-510481 | A | |
| | | | | US | 2024/0166806 | A1 | |
| | | | | EP | 4059979 | A1 | |
| | | | | KR | 10-2023-0157370 | A | |
| | | | | BR | 112023018931 | A | |
| | | | | CN | 117396535 | A | |
| | | | | TW | 202307068 | A | |
| JP | 2018-532844 | A | 08 November 2018 | JP | 2018-532845 | A | |
| | | | | US | 2018/0282599 | A1 | |
| | | | | US | 2020/0216727 | A1 | |
| | | | | WO | 2017/055045 | A1 | |
| | | | | WO | 2017/055044 | A1 | |
| | | | | AU | 2016332497 | A | |
| | | | | CN | 108026427 | A | |
| | | | | CN | 108026426 | A | |
| | | | | AU | 2016332496 | A | |
| | | | | EA | 201890699 | A | |
| | | | | EA | 201890698 | A | |
| | | | | BR | 112018005481 | A | |
| JP | 8-92359 | A | 09 April 1996 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011088959 A

**Non-patent literature cited in the description**

- Proposal of Adhesive Agents Using Renewable Sources Containing Plant-Derived Ingredients. **SHINYA TAKAHASHI**. Convertech. Converting Technical Institute, February 2009, 103-108
- **MENGYUAN ZHANG**. Synthesis of Poly(1-lactide-co-$\varepsilon$-caprolactone) Copolymer: Structure, Toughness, and Elasticity. *Polymers*, 2021, vol. 13, 1270, https://doi.org/10.3390/polym13081270

- **MENGYUAN ZHANG**. Synthesis of Poly(l-lactide-co-$\varepsilon$-caprolactone) Copolymer: Structure, Toughness, and El asticity. *Polymers*, 2021, vol. 13, 1270, https://doi.org/10.3390/polym1308127 0